# EUROPÄISCHE PATENTSCHRIFT

(11) **EP 3 666 060 B1**
(45) Veröffentlichungstag und Bekanntmachung des Hinweises auf die Patenterteilung: **20.10.2021**
(21) Anmeldenummer: 19214717.1
(22) Anmeldetag: 10.12.2019
(51) Int. Cl.: A01F 12/30

(54) **STROHSCHÜTTLERZUSAMMENBAU FÜR EINEN MÄHDRESCHER**
STRAW WALKER STRUCTURE FOR A COMBINE HARVESTER
COMPOSANT BATTEUR DE PAILLE POUR UNE MOISSONNEUSE-BATTEUSE

(30) Priorität: 11.12.2018 DE 102018221418
(43) Veröffentlichungstag der Anmeldung: 17.06.2020
(73) Patentinhaber: Deere & Company, Moline, IL 61265 (US)
(72) Erfinder: Narlawar, Tushar, 68163 Mannheim (DE); Lauer, Friedrich, 68163 Mannheim (DE); Bischoff, Lutz, 68163 Mannheim (DE)
(74) Vertreter: Holst, Sönke

(56) Entgegenhaltungen:
- DE-A1- 2 426 731
- DE-A1- 2 534 206
- DE-A1- 2 547 072
- DE-A1- 3 907 836
- DE-B- 1 155 627
- DE-U- 1 831 439

## Beschreibung

Die Erfindung betrifft einen Strohschüttlerzusammenbau für einen Mähdrescher, umfassend:
eine Anzahl seitlich nebeneinander angeordneter Schüttler, die jeweils einen Siebbelag und an dessen Seiten angeordnete, sich nach oben erstreckende Seitenwände umfassen;
einen Antrieb, der mit den Schüttlern gekoppelt und eingerichtet ist, die Schüttler zueinander phasenversetzt in eine Bewegung zu versetzen, bei der sie sich entlang einer kreisförmigen Bewegungsbahn bewegen, und
wenigstens ein zwischen zwei benachbarten Schüttlern angeordnetes Schüttelelement, das durch jeweils eine drehbare Verbindung mit den beiden dem Schüttelelement benachbarten Schüttlern in Antriebsverbindung steht und im Betrieb durch die Schüttler in eine Bewegung versetzbar ist.

### Stand der Technik

Landwirtschaftliche Mähdrescher sind große Maschinen, die landwirtschaftlich angebautes Erntegut, das Korn trägt, ernten, dreschen, trennen und reinigen. Bei bestimmten Typen von Mähdreschern folgt einem Tangential- oder Mehrtrommeldreschwerk ein Strohschüttlerzusammenbau, um die verbliebenen Körner aus der ausgedroschenen Strohmatte zu separieren.

Derartige Strohschüttlerzusammenbauten umfassen mehrere, seitlich nebeneinander angeordnete (Horden-) Schüttler, die jeweils einen Siebbelag, durch den die Körner hindurchtreten können, und sich vom Siebbelag nach oben erstreckende Seitenwände aufweisen. Die Schüttler sind mit vorderen und hinteren Kurbelwellen gekoppelt, welche die einzelnen Schüttler jeweils phasenverschoben antreiben. Die Schüttler vollführen demnach eine Bewegung entlang einer Kreisbahn und werfen die Strohmatte periodisch nach oben. Beim anschließenden Aufprall auf den Schüttler werden die Körner aus der Strohmatte herausgelöst.

Um die Körnerabscheidung des Strohschüttlers zu verbessern, indem die Strohmatte durch mechanische Einwirkung aufgelockert wird, wurden im Stand der Technik verschiedene Maßnahmen vorgeschlagen. Neben oberhalb des Strohschüttlerzusammenbaus angeordneten Förderern (z.B. DE 70 00 994 U, DE 25 04 354 A1, DD 158 460 A3, DE 24 46 513 A1) wurde auch vorgeschlagen, sich mit den Schüttlern mitbewegende, dort mehr oder weniger elastisch angebrachte Elemente zu diesem Zweck zu verwenden (z.B. DE 10 2011 056 607 A1, DE 34 41 238 A1, DE 81 00 584 U, DE 82 19 390 U, DE 36 01 360 A1). Die Wirkung dieser Förderer und Elemente ist jedoch begrenzt.

Ein anderer Ansatz besteht darin, zwischen den benachbarten Schüttlern zusätzliche, kammartige Elemente anzubringen, die sich entlang der Schüttler erstrecken und durch separate Kurbelwellen (DE 24 31 117 A1, DE 40 34 852 A1) oder direkt oder indirekt durch die zum Antrieb der Schüttler dienende Kurbelwelle angetrieben werden (DE 18 31 439 U, DE 25 34 206 A1). Hier ist der Aufwand für den separaten Antrieb der kammartigen Elemente als nachteilig anzusehen.

In der als gattungsbildend angesehenen DE 11 55 627 A wird vorgeschlagen, zwischen den Schüttlern angebrachte, zusätzliche Schüttelelemente mit den beiden benachbarten Schüttlern zu koppeln. Dazu wird eine Führungsstange um die Querachse schwenkbar mit dem Boden eines ersten Schüttlers und ebenfalls um die Querachse schwenkbar und axial verschiebbar mit der Oberseite eines zweiten Schüttlers verbunden, der gegenüber dem ersten Schüttler mit einem Phasenversatz von 120° angetrieben wird. Die Führungsstange erstreckt sich demnach nach vorn und oben (oder nach hinten und oben) und trägt an ihrem äußeren, oberen Ende das kammartig ausgebildete und mit Zacken versehene Schüttelelement. Aufgrund dieser Anordnung mit um unterschiedliche Mittelpunkte rotierenden Verbindungspunkten zwischen den Schüttlern und der Führungsstange liegt die Hauptkomponente der Bewegung des Schüttelelements in vertikaler Richtung, was auch beabsichtigt ist, um das Stroh durch Schläge von unten her aufzulockern. Demnach führt das Schüttelelement eine Schwenkbewegung durch und taucht nur für kurze Zeit und einmalig während eines Umlaufs der Kurbelwelle zwischen den beiden Schüttlern ein und befindet sich während der übrigen Zeit oberhalb der benachbarten Schüttler. Er stört daher eher den Gutfluss als dass er die Abscheidung des Strohschüttlerzusammenbaus verbessern würde.

### Aufgabe

Die der Erfindung zu Grunde liegende Aufgabe wird darin gesehen, einen Strohschüttlerzusammenbau dahingehend zu verbessem, dass die oben erwähnten Nachteile vermieden oder zumindest vermindert werden.

### Erfindung

Die vorliegende Erfindung wird durch die Patentansprüche definiert.

Ein Strohschüttlerzusammenbau für einen Mähdrescher umfasst eine Anzahl seitlich nebeneinander angeordneter Schüttler, die jeweils einen Siebbelag und an dessen Seiten angeordnete, sich nach oben erstreckende Seitenwände umfassen; einen Antrieb, der mit den Schüttlern gekoppelt und eingerichtet ist, die Schüttler zueinander phasenversetzt in eine Bewegung entlang einer kreisförmigen Bewegungsbahn zu versetzen, und wenigstens ein zwischen zwei benachbarten Schüttlern angeordnetes Schüttelelement, das durch jeweils eine drehbare Verbindung mit den beiden dem Schüttelelement benachbarten Schüttlern in Antriebsverbindung steht und im Betrieb durch die Schüttler in eine Bewegung versetzbar ist. Die drehbaren Verbindungen sind derart an den Schüttlern und am Schüttelelement angeordnet, dass das Schüttelelement in eine Rotationsbewegung um eine Drehachse versetzbar ist.

Mit anderen Worten wird vorgeschlagen, die Kinematik der Antriebsverbindung zwischen den Schüttlern und dem dazwischen angeordneten Schüttelelement derart zu gestalten, dass letzteres eine vollständige Kreisbewegung um eine Drehachse durchführt (und nicht nur eine Schwenkbewegung, wie im Stand der Technik nach DE 1 155 627 A vorgesehen). Wenn die Schüttler somit auf ihrer Kreisbahn rotieren, führt auch das Schüttelelement eine Kreisbewegung durch. Da alle Bereiche des Umfangs des Schüttelelements nacheinander mit der Strohmatte in Eingriff gelangen und diese unterschiedlichen Bereiche auch unterschiedlich ausgeformt werden können, ermöglicht die vorgeschlagene Kinematik eine größere Anzahl an Eingriffen in die Strohmatte pro Umlauf der Schüttler, was zu einer verbesserten Abscheidung führt.

Die erwähnte Kreisbewegung des Schüttelelements kann erzielt werden, indem eine erste der Verbindungen an einem ersten der beiden Schüttler an einem ersten Punkt angebracht ist, der sich auf einer Kreisbahn um einen ersten Mittelpunkt bewegt, eine zweite der Verbindungen an einem zweiten der beiden Schüttler an einem zweiten Punkt angebracht ist, der sich auf derselben Kreisbahn um einen zweiten Mittelpunkt bewegt und die beiden Mittelpunkte auf einer gemeinsamen Achse liegen.

Die Verbindungen können in vertikaler und horizontaler Richtung jeweils in gleicher Lage an den Schüttlern angebracht werden.

Das Schüttelelement kann zu einer ersten Symmetrielinie, die durch die beiden Verbindungen geht, zumindest näherungsweise spiegelsymmetrisch sein, und/oder zu einer zweiten Symmetrielinie, die quer zur ersten Symmetrielinie und durch den Mittelpunkt zwischen den Verbindungen verläuft, zumindest näherungsweise spiegelsymmetrisch sein. Das Schüttelelement kann entlang der zweiten Symmetrielinie länger als oder gleich lang wie entlang der ersten Symmetrielinie sein.

Der Umfang des Schüttelelements kann teilweise oder komplett glatt und/oder teilweise oder komplett gezackt sein.

Die Verbindungen können als Schraub- oder Einschnappverbindung ausgeführt sein.

### Ausführungsbeispiel

In den Zeichnungen sind nachfolgend näher beschriebene Ausführungsbeispiele dargestellt, wobei die Bezugszeichen nicht zu einer einschränkenden Auslegung heranzuziehen sind. Es zeigt:
- Fig. 1: eine schematische seitliche Ansicht eines Mähdreschers mit einem Tangentialdreschwerk und einem Strohschüttlerzusammenbau,
- Fig. 2: eine perspektivische Ansicht des Strohschüttlerzusammenbaus,
- Fig. 3: eine seitliche Ansicht des Strohschüttlerzusammenbaus,
- Fig. 4: einen horizontalen Schnitt durch die Figur 3 entlang der Linien 96-96 und 98-98,
- Fig. 5: einen horizontalen Schnitt durch die Figur 3 entlang der Linien 96-96 und 98-98 in einer anderen Ausführungsform als Figur 4,
- Fig. 6: eine Vergrößerung aus Figur 5,
- Fig. 7: eine vergrößerte Ansicht der Figur 3 mit schematisch angedeuteten Schüttelelementen, und
- Fig. 8 bis 12: seitliche Ansichten unterschiedlicher Ausführungsformen der Schüttelelemente.

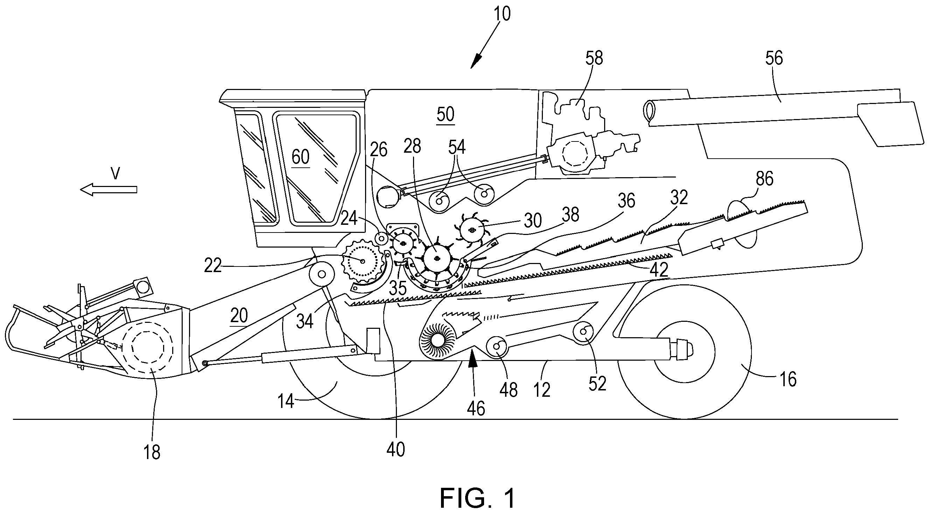

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vom und hinten, auf die Fahrtrichtung V des Mähdreschers 10 im Erntebetrieb.

An den vorderen Endbereich des Mähdreschers 10 ist eine Emtegutbergungsvorrichtung 18 in Form eines Schneidwerks abnehmbar angeschlossen, um beim Erntebetrieb Emtegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttlerzusammenbau 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung angeordnet, während sich oberhalb der Fördertrommel 26 eine fest stehende Abdeckung und unterhalb des Tangentialseparators 28 ein Separierkorb 36 mit oder ohne verstellbare(n) Fingerelementen befindet. Unterhalb der Wendetrommel 30 ist ein Fingerrechen 38 angeordnet, der auch entfallen könnte.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlerzusammenbaus 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttlerzusammenbau ersetzt werden.

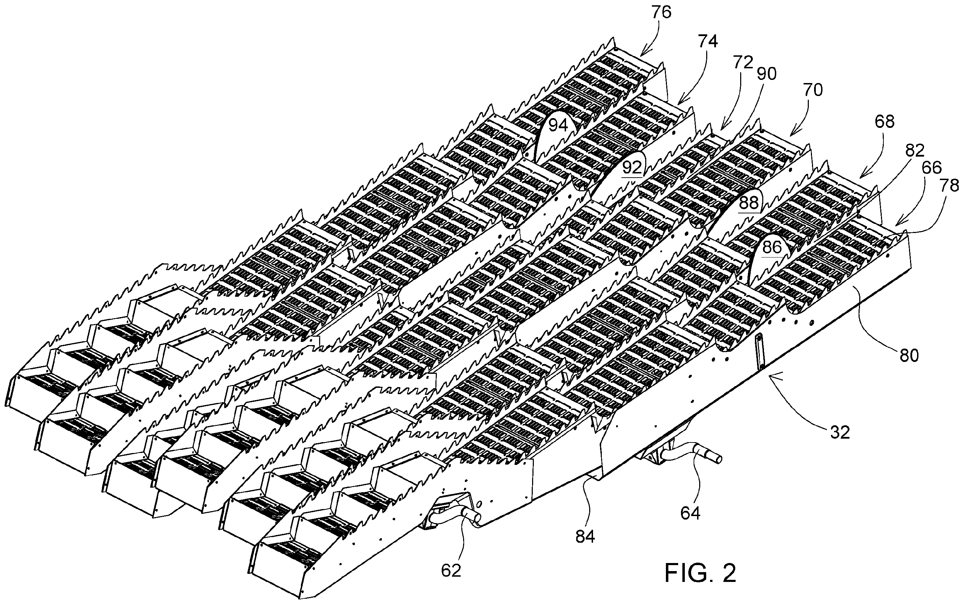

Die Figur 2 zeigt eine perspektivische Ansicht des Strohschüttlerzusammenbaus 32. Er setzt sich aus mehreren (im gezeigten Beispiel sechs) Schüttlem 66, 68, 70, 72, 74, 76 zusammen, die seitlich nebeneinander angeordnet sind. Die Schüttler 66, 68, 70, 72, 74, 76 sind sämtlich baugleich und umfassen jeweils horizontale Siebbeläge 78, die zwischen vertikal verlaufenden Seitenwänden 80, 82 angeordnet sind, die sich von den Siebbelägen 78 zackenförmig nach oben und gerade nach unten erstrecken. An den Unterseiten der Seitenwände 80, 82 befinden sich (jedenfalls im hinteren Bereich des Strohschüttlerzusammenbaus 32) Förderböden 84, die zum Abtransport des abgeschiedenen Koms zum Förderboden 42 dienen. Im vorderen Bereich des Strohschüttlerzusammenbaus 32 können die Förderböden 84 auch entfallen, da das Korn dort direkt auf den rückwärtigen Förderboden 42 fällt. Die einzelnen Schüttler 66, 68, 70, 72, 74, 76 sind an einer vorderen Kurbelwelle 62 und an einer hinteren Kurbelwelle 64 am Rahmen 12 des Mähdreschers 10 abgestützt. Wenigstens eine der quer verlaufenden Kurbelwellen 62 oder 64 ist durch einen Antriebsstrang mit dem Verbrennungsmotor 58 verbunden. Die Strohschüttler 66, 68, 70, 72, 74, 76 bewegen sich demnach jeweils untereinander phasenverschoben (z.B. um 120°) auf Kreisbahnen, um die an ihren Oberseiten liegende Strohmatte sukzessive nach oben und hinten zu transportieren und dabei das nach dem Dreschen darin verbliebene Korn abzuscheiden.

In der Figur 2 ist auch erkennbar, dass in den Zwischenräumen zwischen benachbarten Schüttlern 66, 68, 70, 72, 74, 76 jeweils ein Schüttelelement 86, 88, 90, 92, 94 angeordnet ist, dessen Form, Anbringung und Funktion im Folgenden erläutert werden.

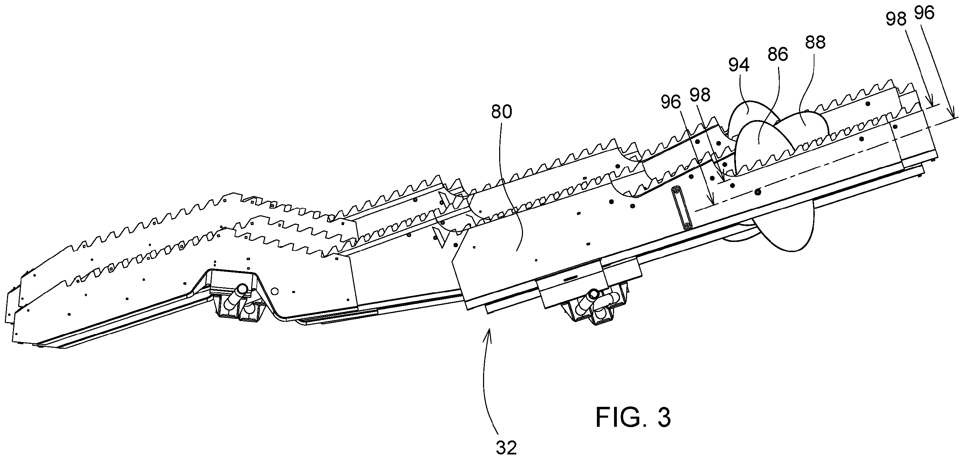

Wie in den Figuren 2, 3 und 7 erkennbar, nehmen die Schüttelelemente 86, 88, 90, 92, 94 unterschiedliche Drehstellungen ein, die davon abhängen, in welcher Stellung die beiden benachbarten Schüttler 66, 68, 70, 72, 74, 76 sich jeweils befinden. Die Schüttelelemente 86, 88, 90, 92, 94 sind in der dargestellten Ausführungsform in sich flach, damit sie zwischen die Schüttler 66, 68, 70, 72, 74, 76 passen und jeweils etwa ellipsenförmig.

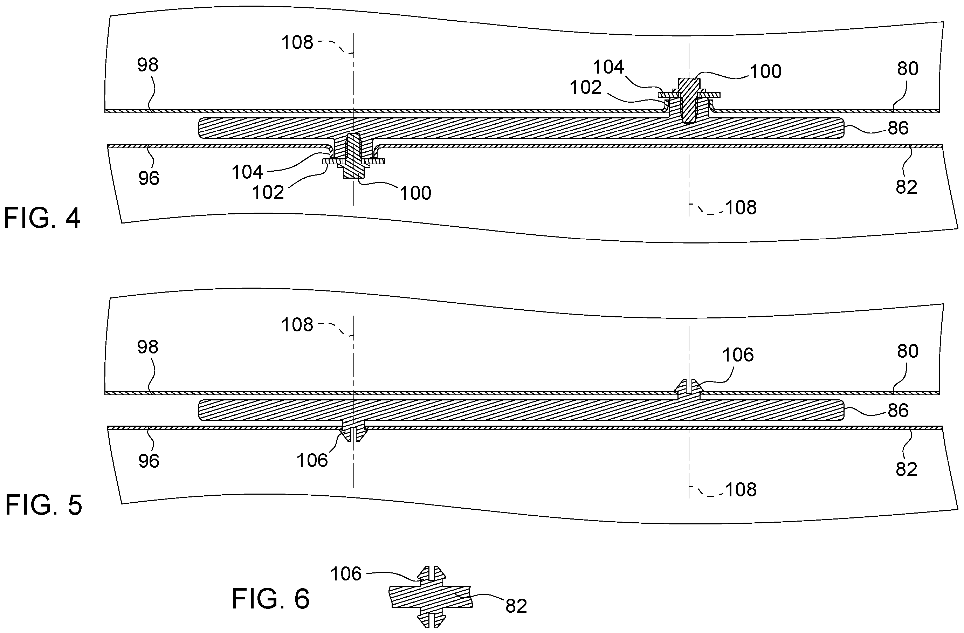

Die Anbringung der Schüttelelemente 86, 88, 90, 92, 94 an den benachbarten Schüttlern 66, 68, 70, 72, 74, 76 erfolgt durch jeweils eine drehbare Verbindung mit einer Drehachse 108, wie in den Figuren 4 bis 6 gezeigt. Bei einer ersten Ausführungsform gemäß der Figur 4 sind die Schüttelelemente 86, 88, 90, 92, 94 mit Verdickungen 104 ausgestattet, die sich durch Öffnungen in der Seitenwand 80 oder 82 des benachbarten Schüttlers 66, 68, 70, 72, 74, 76 erstrecken. An der Innenseite der Seitenwand 80 oder 82 liegt am Rand der Öffnung eine Unterlegscheibe 102 an, durch die sich eine Schraube 100 hindurch erstreckt, welche in die Verdickung 104 und ggf. bis in das Material des Schüttelelements 86, 88, 90, 92, 94 eingeschraubt ist. Hierbei kann es sich um selbst ein Gewinde schneidende Schraube 100 handeln oder das Gewinde ist bereits vorhanden. Die Unterlegscheibe 102 kann aus einem reibungsarmen Material sein, um die Drehung des Schüttelelementes 86, 88, 90, 92, 94 gegenüber dem Schüttler 66, 68, 70, 72, 74, 76 zu ermöglichen.

Bei der zweiten Ausführungsform nach Figur 5 und 6 wird die Schraubverbindung durch eine Einschnappverbindung ersetzt, bei der ein geeignetes Einschnappelement 106 durch die Öffnung der Wand 80 oder 82 gesteckt wird und durch Widerhaken o.ä. dort arretiert ist. Eine derartige Einschnappverbindung kann auch zwischen dem Einschnappelement 106 und dem Schüttelelement 86, 88, 90, 92, 94 verwendet werden. Auch das Einschnappelement stellt eine drehbare Verbindung mit einer Drehachse 108 zwischen dem Schüttelelement 86, 88, 90, 92, 94 und je einem der benachbarten Schüttler 66, 68, 70, 72, 74, 76 bereit.

Bei beiden Ausführungsformen ist vorzugsweise eine erste der drehbaren Verbindungen hinreichend stabil gestaltet, um das Schüttelelement 86, 88, 90, 92, 94 hinreichend fest, aber drehbar, am zugehörigen Schüttler 66, 68, 70, 72, 74, 76 zu befestigen. Die zweite der drehbaren Verbindungen muss nicht ganz so stabil sein, sondern nur die Drehbewegung übertragen. Da Toleranzen möglich sind, z.B. in den Kurbelwellen 62, 64 und in den Schüttlern 66, 68, 70, 72, 74, 76, ist es denkbar, dass die zweite drehbare Verbindung ein axiales und/oder radiales Spiel aufweisen. Die zweite Verbindung dient demnach eher als Führung und weniger zur Halterung des Schüttelelements 86, 88, 90, 92, 94.

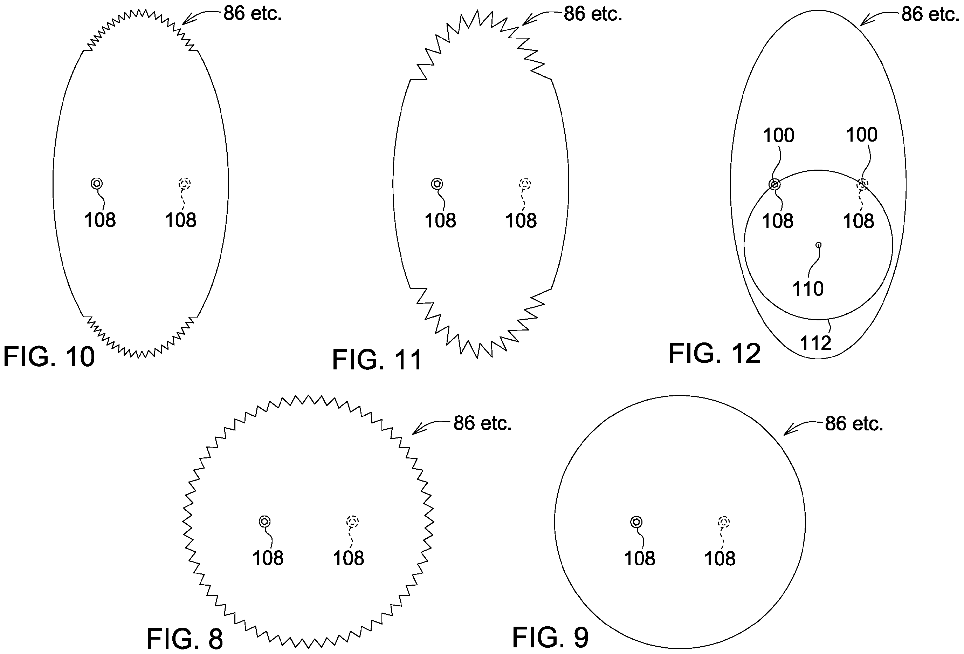

Die Figuren 8 bis 12 zeigen unterschiedliche, mögliche Ausführungsformen des Schüttelelements 86, 88, 90, 92, 94. Die Figur 8 zeigt ein kreisförmiges, am Umfang verzahntes Schüttelelement 86, 88, 90, 92, 94, während die Figur 9 ein kreisförmiges Schüttelelement 86, 88, 90, 92, 94 mit glattem Umfang zeigt. Die Figuren 10 bis 12 zeigen ovale Schüttelelemente 86, 88, 90, 92, 94, bei denen in Figur 10 und 11 die von den mittig angeordneten, drehbaren Verbindungen mit den Drehachsen 108 beabstandeten Umfangs-Bereiche mit unterschiedlichen Verzahnungen versehen sind und der Rest des Umfangs glatt ist, während in Figur 12 der gesamte Umfang glatt ist. Die Schüttelelemente 86, 88, 90, 92, 94 sind in den gezeigten Ausführungsformen jeweils spiegelsymmetrisch zu einer ersten gedachten Symmetrielinie, die durch die drehbaren Verbindungen mit den Drehachsen 108 verläuft und auch spiegelsymmetrisch zu einer zweiten Symmetrielinie, die quer zur ersten Symmetrielinie und durch den Mittelpunkt zwischen den drehbaren Verbindungen mit den Drehachsen 108 verläuft. Das muss jedoch nicht notwendigerweise der Fall sein, denn die Lage der drehbaren Verbindungen könnte z.B. entlang der zweiten Symmetrielinie versetzt werden, damit der Mittelpunkt des Schüttelelements 86, 88, 90, 92, 94 mit dem Mittelpunkt 110 der vom Schüttelelement 86, 88, 90, 92, 94 im Betrieb vollführten Kreisbewegung übereinstimmt, oder eine beliebige andere (Umriss-) Form der Schüttelelemente 86, 88, 90, 92, 94 kann vorgesehen sein.

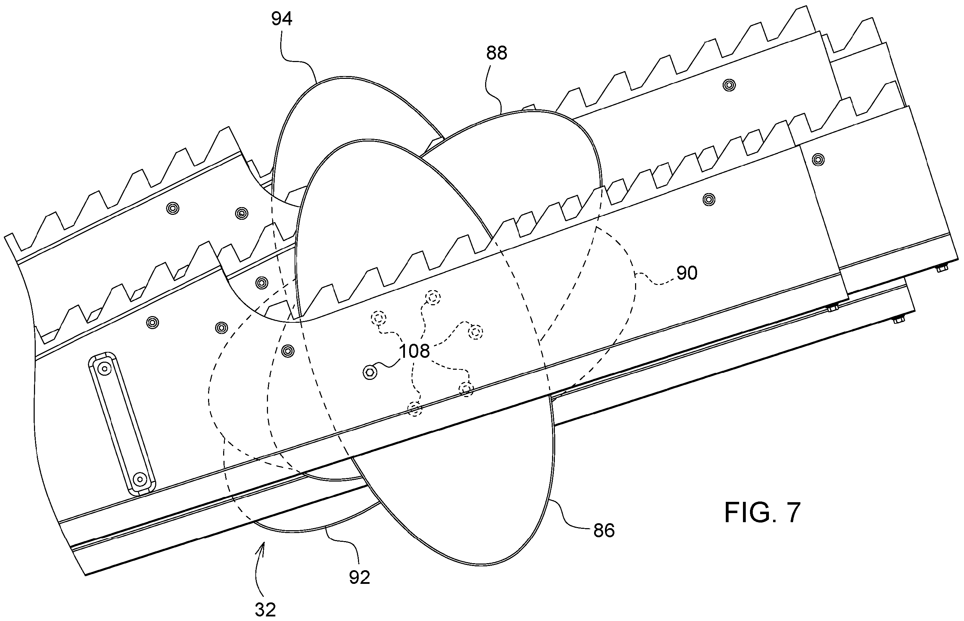

Zur Erläuterung der Funktion der Schüttelelemente 86, 88, 90, 92, 94 ist anzumerken, dass die horizontal und quer verlaufenden Drehachsen 108 an den Seitenwänden 80, 82 der benachbarten Schüttlern 66, 68, 70, 72, 74, 76 jeweils an der gleichen Stelle angeordnet sind, d.h. in vertikaler und horizontaler Richtung jeweils in derselben Position. Legt man die benachbarten Schüttler 66, 68, 70, 72, 74, 76 (ohne Kurbelwellen 62, 64) nebeneinander und in Vorwärtsrichtung ausgerichtet auf den Boden, sind die einem Schüttelelement 86, 88, 90, 92, 94 zugeordneten Öffnungen für die Drehachsen 108 in den Seitenwänden 80, 82 demnach koaxial ausgerichtet. Im Betrieb bewegen sich die Drehachsen 108 auf identischen, nur seitlich und in der Phase verschobenen Kreisbahnen 112 um koaxiale, nur seitlich versetzte Mittelpunkte 110 (vgl. Figur 12), da die Schüttler 66, 68, 70, 72, 74, 76 an den Kurbelwellen 62, 64 abgestützt sind. Durch den Phasenversatz der benachbarten Schüttler 66, 68, 70, 72, 74, 76 bedingt, bewegen sich die Drehachsen 108 und die Schüttelelemente 86, 88, 90, 92, 94 somit ebenfalls auf der Kreisbahn 112 um die koaxialen Mittelpunkte 110, was zu den in der Figur 7 gezeigten, unterschiedlichen Positionen führt. Da die beiden Drehachsen 108 sich auf identischen (nur phasenverschobenen) Kreisbahnen 112 um den auf einer gemeinsamen, quer verlaufenden Achse liegenden Mittelpunkt 110 drehen, laufen die Schüttelelemente 86, 88, 90, 92, 94 eine komplette Kreisbahn 112 um den Mittelpunkt 110, wenn sich die Kurbelwellen 62, 64 um 360° drehen, wie in den Figuren 7 und 12 gezeigt. Eine Relativverschiebung der Drehachsen 108 findet beim Drehen der Kurbelwellen 62, 64 nicht statt (anders als im Stand der Technik nach DE 1 155 627 A, wo die Drehachsen 18 und 19 der dort gezeigten Figur 1 um unterschiedliche Mittelpunkte rotieren, und die dort vorhandene Schwenkbewegung des Schüttelelements 25 wird durch die Drehung ersetzt).

Wie in den Figuren 2, 3, und 7 erkennbar, ragen die Schüttelelemente 86, 88, 90, 92, 94 am weitesten zwischen den benachbarten Schüttlern 66, 68, 70, 72, 74, 76 nach oben, wenn diese Schüttler 66, 68, 70, 72, 74, 76 sich etwa in derselben Höhe befinden. Einer der beiden Schüttler 66, 68, 70, 72, 74, 76 befindet sich dann in der Abwärtsbewegung und das darüber befindliche Emtegut wird durch das Schüttelelement 86, 88, 90, 92, 94, das sich noch in der Aufwärtsbewegung befindet, wieder angehoben, und zwar mit einer höheren Geschwindigkeit als sie der benachbarte, auch in der Aufwärtsbewegung befindliche Schüttler 66, 68, 70, 72, 74, 76 durchführt. Auf diese Weise erreicht man, dass die Strohmatte effektiv und mit einfachen Mitteln aufgelockert wird. Es wäre jedoch möglich, andere Zeitabstimmungen (Verhältnisse zwischen Drehwinkel der Schüttler 66, 68, 70, 72, 74, 76 und Schüttelelemente 86, 88, 90, 92, 94) zu wählen, z.B. die Schüttelelemente 86, 88, 90, 92, 94 horizontal zu stellen, wenn die benachbarten Schüttler 66, 68, 70, 72, 74, 76 in einer gemeinsamen Ebene liegen. Hierzu wären die Positionierungen der Drehachsen 108 an den Schüttelelementen 86, 88, 90, 92, 94 anzupassen.

Bei der dargestellten Ausführungsform befinden sich die Schüttelelemente 86, 88, 90, 92, 94 bezüglich der Längsrichtung des Schüttlerzusammenbaus 32 etwa im siebten Achtel des Schüttlerzusammenbaus 32 und sind in seitlicher Richtung miteinander ausgerichtet. Sie können auch an beliebiger anderer Stelle des Schüttlerzusammenbaus 32 (d.h. weiter vorn oder hinten) angebracht werden, oder bei seitlich benachbarten Schüttelelementen 86, 88, 90, 92, 94 in Vorwärtsrichtung versetzt, oder zwischen benachbarten Schüttlern 66, 68, 70, 72, 74, 76 können hintereinander mehrere Schüttelelemente 86, 88, 90, 92, 94 angeordnet sein. Auch könnte zwischen einigen der Schüttler 66, 68, 70, 72, 74, 76 kein Schüttelelement 86, 88, 90, 92, 94 sein.

## Patentansprüche

1. Strohschüttlerzusammenbau (32) für einen Mähdrescher (10), umfassend:
eine Anzahl seitlich nebeneinander angeordneter Schüttler (66, 68, 70, 72, 74, 76), die jeweils einen Siebbelag (78) und an dessen Seiten angeordnete, sich nach oben erstreckende Seitenwände (80, 82) umfassen;
einen Antrieb, der mit den Schüttlern (66, 68, 70, 72, 74, 76) gekoppelt und eingerichtet ist, die Schüttler (66, 68, 70, 72, 74, 76) zueinander phasenversetzt in eine Bewegung zu versetzen, bei der sie sich entlang einer kreisförmigen Bewegungsbahn bewegen, und
wenigstens ein zwischen zwei benachbarten Schüttlern (66, 68, 70, 72, 74, 76) angeordnetes Schüttelelement (86, 88, 90, 92, 94), das durch jeweils eine drehbare Verbindung mit einer Drehachse (108) mit den beiden dem Schüttelelement (86, 88, 90, 92, 94) benachbarten Schüttlern (66, 68, 70, 72, 74, 76) in Antriebsverbindung steht und im Betrieb durch die Schüttler (66, 68, 70, 72, 74, 76) in eine Bewegung versetzbar ist,
**dadurch gekennzeichnet, dass** die drehbaren Verbindungen derart an den Schüttlern (66, 68, 70, 72, 74, 76) und am Schüttelelement (86, 88, 90, 92, 94) angeordnet sind, dass das Schüttelelement (86, 88, 90, 92, 94) in eine Rotationsbewegung um eine Drehachse versetzbar ist.

2. Strohschüttlerzusammenbau (32) nach Anspruch 1, wobei eine erste der Verbindungen an einem ersten der beiden Schüttler (66, 68, 70, 72, 74, 76) an einem ersten Punkt angebracht ist, der sich auf einer Kreisbahn (112) um einen ersten Mittelpunkt (110) bewegt, eine zweite der Verbindungen an einem zweiten der beiden Schüttler (66, 68, 70, 72, 74, 76) an einem zweiten Punkt angebracht ist, der sich auf derselben Kreisbahn (112) um einen zweiten Mittelpunkt (110) bewegt und die beiden Mittelpunkte (110) auf einer gemeinsamen Achse liegen.

3. Strohschüttlerzusammenbau (32) nach Anspruch 2, wobei die Verbindungen in vertikaler und horizontaler Richtung jeweils in gleicher Lage an den Schüttlern (66, 68, 70, 72, 74, 76) angebracht sind.

4. Strohschüttlerzusammenbau (32) nach einem der Ansprüche 1 bis 3, wobei das Schüttelelement (86, 88, 90, 92, 94) zu einer ersten Symmetrielinie, die durch die beiden Verbindungen geht, zumindest näherungsweise spiegelsymmetrisch ist.

5. Strohschüttlerzusammenbau (32) nach Anspruch 4, wobei das Schüttelelement (86, 88, 90, 92, 94) zu einer zweiten Symmetrielinie, die quer zur ersten Symmetrielinie und durch den Mittelpunkt zwischen den Verbindungen verläuft, zumindest näherungsweise spiegelsymmetrisch ist.

6. Strohschüttlerzusammenbau (32) nach Anspruch 5, wobei das Schüttelelement (86, 88, 90, 92, 94) entlang der zweiten Symmetrielinie länger als oder gleich lang wie entlang der ersten Symmetrielinie ist.

7. Strohschüttlerzusammenbau (32) nach einem der vorhergehenden Ansprüche, wobei der Umfang des Schüttelelements (86, 88, 90, 92, 94) teilweise oder komplett glatt und/oder teilweise oder komplett gezackt ist.

8. Strohschüttlerzusammenbau (32) nach der vorhergehenden Ansprüche, wobei die Verbindungen als Schraub- oder Einschnappverbindung ausgeführt sind.

9. Mähdrescher (10) mit einem Schüttlerzusammenbau (32) nach einem der vorhergehenden Ansprüche.

## Claims

1. Straw walker structure (32) for a combine harvester (10), comprising:
a number of walkers (66, 68, 70, 72, 74, 76) arranged laterally alongside one another, which each comprise a sieve surface (78) and upwardly extending side walls (80, 82) arranged at the sides thereof;
a drive which is coupled to the walkers (66, 68, 70, 72, 74, 76) and is set up to set the walkers (66, 68, 70, 72, 74, 76) in motion in a phase-offset manner with respect to one another, in which they move along a circular trajectory, and
at least one shaking element (86, 88, 90, 92, 94) which is arranged between two adjacent walkers (66, 68, 70, 72, 74, 76) and is connected in terms of drive to the two walkers (66, 68, 70, 72, 74, 76) adjacent to the shaking element (86, 88, 90, 92, 94) by in each case a rotatable connection with an axis of rotation (108), and is able to be set in motion by the walkers (66, 68, 70, 72, 74, 76) during operation,
**characterized in that** the rotatable connections are arranged on the walkers (66, 68, 70, 72, 74, 76) and on the shaking element (86, 88, 90, 92, 94) in such a way that the shaking element (86, 88, 90, 92, 94) is able to be set in rotational motion about an axis of rotation.

2. Straw walker structure (32) according to Claim 1, wherein a first of the connections is attached to a first of the two walkers (66, 68, 70, 72, 74, 76) at a first point that moves on a circular path (112) about a first centre point (110), a second of the connections is attached to a second of the two walkers (66, 68, 70, 72, 74, 76) at a second point that moves on the same circular path (112) about a second centre point (110), and the two centre points (110) lie on a common axis.

3. Straw walker structure (32) according to Claim 2, wherein the connections are attached to the walkers (66, 68, 70, 72, 74, 76) in each case in the same position in a vertical and horizontal direction.

4. Straw walker structure (32) according to one of Claims 1 to 3, wherein the shaking element (86, 88, 90, 92, 94) is at least approximately mirror symmetric with respect to a first line of symmetry that passes through the two connections.

5. Straw walker structure (32) according to Claim 4, wherein the shaking element (86, 88, 90, 92, 94) is at least approximately mirror symmetric with respect to a second line of symmetry that extends transversely to the first line of symmetry and through the centre point between the connections.

6. Straw walker structure (32) according to Claim 5, wherein the shaking element (86, 88, 90, 92, 94) is longer along the second line of symmetry than or equally as long along the second line of symmetry as along the first line of symmetry.

7. Straw walker structure (32) according to one of the preceding claims, wherein the circumference of the shaking element (86, 88, 90, 92, 94) is partially or entirely smooth and/or partially or entirely jagged.

8. Straw walker structure (32) according to the preceding claims, wherein the connections are embodied as screw connections or snap-in connections.

9. Combine harvester (10) having a straw walker structure (32) according to one of the preceding claims.

## Revendications

1. Ensemble de secoueurs de paille (32) pour une moissonneuse-batteuse (10), comprenant :
un certain nombre de secoueurs (66, 68, 70, 72, 74, 76) disposés côte à côte, qui comprennent respectivement un panneau de criblage (78) et des parois latérales (80, 82) disposées sur les côtés de celui-ci et s'étendant vers le haut ;
un dispositif d'entraînement qui est accouplé aux secoueurs (66, 68, 70, 72, 74, 76) et est aménagé pour appliquer aux secoueurs (66, 68, 70, 72, 74, 76) de manière déphasée les uns par rapport aux autres un mouvement par lequel ils se déplacent le long d'une trajectoire circulaire, et
au moins un élément secoueur (86, 88, 90, 92, 94) disposé entre deux secoueurs voisins (66, 68, 70, 72, 74, 76), qui se trouve en relation d'entraînement avec les deux secoueurs (66, 68, 70, 72, 74, 76) voisins de l'élément secoueur (86, 88, 90, 92, 94) par respectivement un raccordement rotatif avec un axe de rotation (108) et peut en cours de fonctionnement être mis en mouvement par les secoueurs (66, 68, 70, 72, 74, 76),
**caractérisé en ce que** les raccordements rotatifs sont disposés sur les secoueurs (66, 68, 70, 72, 74, 76) et sur l'élément secoueur (86, 88, 90, 92, 94) de telle sorte que l'élément secoueur (86, 88, 90, 92, 94) peut être mis en rotation autour d'un axe de rotation.

2. Ensemble de secoueurs de paille (32) selon la revendication 1, dans lequel un premier des raccordements est installé à un premier des deux secoueurs (66, 68, 70, 72, 74, 76) en un premier point qui se déplace sur une trajectoire circulaire (112) autour d'un premier centre (110), un deuxième des raccordements est installé à un deuxième des deux secoueurs (66, 68, 70, 72, 74, 76) en un deuxième point qui se déplace sur la même trajectoire circulaire (112) autour d'un deuxième centre (110), et les deux centres (110) sont situés sur un axe commun.

3. Ensemble de secoueurs de paille (32) selon la revendication 2, dans lequel les raccordements sont installés sur les secoueurs (66, 68, 70, 72, 74, 76) respectivement dans la même position dans la direction verticale et horizontale.

4. Ensemble de secoueurs de paille (32) selon l'une quelconque des revendications 1 à 3, dans lequel l'élément secoueur (86, 88, 90, 92, 94) est au moins approximativement en symétrie spéculaire par rapport à un premier axe de symétrie passant par les deux raccordements.

5. Ensemble de secoueurs de paille (32) selon la revendication 4, dans lequel l'élément secoueur (86, 88, 90, 92, 94) est au moins approximativement en symétrie spéculaire par rapport à un deuxième axe de symétrie qui est transversal au premier axe de symétrie et s'étend à travers le centre entre les raccordements.

6. Ensemble de secoueurs de paille (32) selon la revendication 5, dans lequel l'élément secoueur (86, 88, 90, 92, 94) est le long du deuxième axe de symétrie plus long ou aussi long que le long du premier axe de symétrie.

7. Ensemble de secoueurs de paille (32) selon l'une quelconque des revendications précédentes, dans lequel la circonférence de l'élément secoueur (86, 88, 90, 92, 94) est partiellement ou complètement lisse et/ou partiellement ou complètement crénelée.

8. Ensemble de secoueurs de paille (32) selon l'une quelconque des revendications précédentes, dans lequel les raccordements sont réalisés sous forme de raccordements vissés ou à encliquetage.

9. Moissonneuse-batteuse (10) comprenant un ensemble de secoueurs de paille (32) selon l'une quelconque des revendications précédentes.
